**Europäisches Patentamt**

**European Patent Office**

**Office européen des brevets**

(19)

(11) Veröffentlichungsnummer: **0 253 260 B1**

(12) **EUROPÄISCHE PATENTSCHRIFT**

(45) Veröffentlichungstag der Patentschrift:
03.05.89

(21) Anmeldenummer: **87109698.8**

(22) Anmeldetag: **06.07.87**

(51) Int. Cl.⁴: **B29C 59/04, B29D 7/01, A61M 5/00, A61M 5/14 // B29K75:00**

(54) Verfahren zur Herstellung von Polyurethanfolien für Blut- oder Infusionsbeutel.

(30) Priorität: **18.07.86 DE 3624319**

(43) Veröffentlichungstag der Anmeldung:
**20.01.88 Patentblatt 88/3**

(45) Bekanntmachung des Hinweises auf die Patenterteilung:
**03.05.89 Patentblatt 89/18**

(84) Benannte Vertragsstaaten:
**AT DE GB SE**

(56) Entgegenhaltungen:
**AT-B- 356 253
DD-A- 111 865
DE-A- 1 779 204
DE-A- 2 833 982
DE-B- 1 161 002**

(73) Patentinhaber: **Wolff Walsrode Aktiengesellschaft, Postfach, D-3030 Walsrode 1(DE)**

(72) Erfinder: **Ermert, Wolfgang, Dr., Am Hang 24, D-3032 Fallingbostel(DE)**
Erfinder: **Schieder, Hans-Egon, Ing., An der Wisselhorst 20, D-3036 Bomlitz(DE)**
Erfinder: **Funk, Hans-Werner, Ahornstrasse 38, D-3036 Bomlitz(DE)**

(74) Vertreter: **Zobel, Manfred, Dr. et al, c/o BAYER AG Konzernverwaltung RP Patentabteilung Bayerwerk, D-5090 Leverkusen(DE)**

**Beschreibung**

Die vorliegende Erfindung betrifft Verfahren zur Herstellung von durchscheinenden, matten Polyurethanfolien mit einer rauhen Oberfläche, wie sie in Anspruch 1 beschrieben sind, und deren Verwendung zur Herstellung von Blut- oder Infusionsbeuteln.

Aus der DE-OS 3 318 875 ist es bereits bekannt, Folien aus Polyurethanen zur Herstellung von Blutbeuteln zu verwenden, da solche Folien keine Weichmacher enthalten, der durch Blut oder Blutbestandteile herausgelöst werden. Außerdem weisen solche Beutel aus thermoplastischen Polyurethanelastomeren ein günstiges Verhalten bei der notwendigen Tieftemperaturlagerung auf und können ohne Schwierigkeiten sterilisiert werden.

Nachteilig bei den nach den üblichen Extrusionsverfahren hergestellten Folien ist aber, daß sie eine glatte, glänzende Oberfläche aufweisen, die beim Einsatz als Blutbeutelmaterial dazu führt, daß nicht nur die einzelnen Beutel bei ihrer Lagerung bzw. Sterilisierung aneinanderhaften, sondern daß sich auch Blutbestandteile an den Beutelwänden ablagern können.

Versuche, diese Nachteile durch Prägung der Folienoberflächen in üblicher Weise unmittelbar nach der Folienherstellung zu beheben, führten aber nicht zu dem erwünschen Erfolg. Es gelang so nicht, eine durchscheinende, matte Polyurethanfolie mit rauher Oberfläche ohne strukturelle Fehlstellen zu erhalten (siehe AT-C 356 253).

Überraschenderweise gelingt es nun, mit dem erfindungsgemäßen Verfahren durchscheinende, matte Polyurethanfolien mit rauher Oberfläche herzustellen.

Gegenstand der vorliegenden Erfindung sind daher Verfahren zur Herstellung von durchscheinenden, matten Polyurethanfolien mit einer rauhen, strukturell einheitlichen Oberfläche, indem man Folien aus thermoplastischen Polyurethanelastomeren als Flachfolien oder Folienschläuche extrudiert, das dadurch gekennzeichnet ist, daß man die extrudierte Folie bis zu einer Trübung von >15%, vorzugsweise ≧45%, gemessen nach ASTM 1003, lagert und anschließend beide Folienoberflächen mit Hilfe von Prägewalzen mit einer unterschiedlichen Anzahl von Rastern, die jeweils im Bereich von 20 bis 100, vorzugsweise 30 bis 50 Rastern/cm² , liegt, unter einem Druck von 5 bis 20, vorzugsweise 8 bis 12 bar und bei Temperaturen von 130 bis 175°C, vorzugsweise 150 bis 170°C, prägt.

Ein weiterer Gegenstand der Erfindung sind Blut- oder Infusionsbeutel aus den so hergestellten Polyurethanfolien, die sich insbesondere zur Abnahme, Aufbewahrung, Konservierung oder Tiefgefrierung von Blut, Blutplasma, cellulären Blutbestandteilen oder flüssigen Arzneimittelzubereitungen, wie Infusionslösungen, eignen.

Als Polyurethane werden vorzugsweise thermoplastische Polyurethanelastomere eingesetzt, deren Diolkomponente sich von Polyestern oder Polyethern ableitet und eine Shore-A-Härte von 60 bis 90 und einen Schmelzindex von <100, vorzugsweise 20 bis 30 (gemessen nach ASTM bei 8,7 kg/190°C) g/10 Min. aufweisen. Ganz besonders bevorzugt werden Polyetherpolyurethane verwendet, die sich ausschließlich aus aliphatischen Komponenten aufbauen. Solche Polyurethane sind bekannte Handelsprodukte.

Die Polyurethanfolien können als Flachfolien oder als Folienschläuche durch Extrusion bzw. nach dem Folienblasverfahren hergestellt werden. Vorzugsweise erfolgt die Extrusion bei Temperaturen von 150 bis 220°C, besonders bevorzugt bei 165 bis 185°C. Da für die Herstellung von Blutbeuteln die Polyurethanfolien möglichst ohne Zusätze hergestellt werden sollen, ist die Extrusion zu Flachfolien dem Folienblasverfahren vorzuziehen, da bei der ersteren Verfahrensweise die frisch extrudierten Polyurethanfolien leichter zu handhaben sind. Außerdem tritt nur eine vernachlässigbare Längs- und Querreckung der Folie ein, die hinterher auch nur zu einem vernachlässigbaren Schrumpfen des Folienmaterials, z.B. bei der Sterilisation mit Dampf, führt.

Die frisch extrudierten Folien sollten gelagert werden, bis eine Trübung von vorzugsweise gleich oder größer 45%, gemessen nach ASTM D 1003 eintritt. Die Lagerung wird vorzugsweise bei 25°C durchgeführt, wobei aber mit Erhöhung der Lagertemperatur die Lagerzeit verkürzt werden kann.

Die Dicke der Folien sollte im Bereich von 100–350 µm, vorzugsweise 150–250 µm liegen.

Zur Prägung wird dann die Folienbahn in bekannter Weise durch mindestens 2 beheizte Rasterwalzen geführt, deren Anzahl von Rastern unterschiedlich sein muß und jeweils im Bereich von 10 bis 100, vorzugsweise 30 bis 50 Rastern/cm² liegt. Vorzugsweise werden die beiden Folienoberflächen nicht gleichzeitig geprägt, sondern nacheinander, wobei bei den beiden Prägungsschritten vorzugsweise eine Temperaturdifferenz von mindesterns 10°C, vorzugsweise ≧20°C, eingehalten und der 2, Prägungsschritt bei höheren Temperaturen durchgeführt werden sollte.

Die erfindungsgemäß hergestellten Polyurethanfolien zeichnen sich insbesondere durch ihr durchscheinendes mattes Aussehen aus und weisen außerdem eine ausreichend rauhe Oberfläche ohne strukturelle Schwankungen auf, wodurch sie hervorragend zur Herstellung von Blut- oder Infusionsbeuteln geeignet sind. Diese werden vorzugsweise durch Heißsiegeln aus den erfindungsgemäß erhaltenen Folien hergestellt, wobei die Heißsiegelnähte völlig klar und durchsichtig sind und leicht durch Vergleich mit der matten rauhen Oberfläche auf Dichtigkeit geprüft werden können.

<u>Beispiel</u>

a) Ein thermoplastisches Polyetherpolyurethanelastomeres (Typ Esthan® 58309 der Firma Goodridge) wird bei Temperaturen von 180°C zu einer Flachfolie auf eine Gießwalze extrudiert und aufgewickelt. Nach einer Lagerung von 2 Tagen weist die Folie eine Trübung von 45%, gemessen wie oben angegeben, auf, und kann daher in einem Prägewerk, bestehend aus einer Rasterwalze mit 70 Rastern/cm² und einer Stahlwalze als Gegenwalze bei 142°C und 10 bar, einseitig geprägt werden. Die ungeprägte Oberfläche der Flachfolie wird anschließend in einem weiteren Arbeitsgang in einem Prägewerk, bestehend aus einer beheizbaren Rasterwalze mit 30 Rastern/cm² und einer Stahlwalze als Gegenwalze, bei 165°C und 10 bar, geprägt. Die Polyetherpolyurethanfolie ist durchscheinend matt und hat eine rauhe Oberfläche ohne strukturelle Schwankungen.

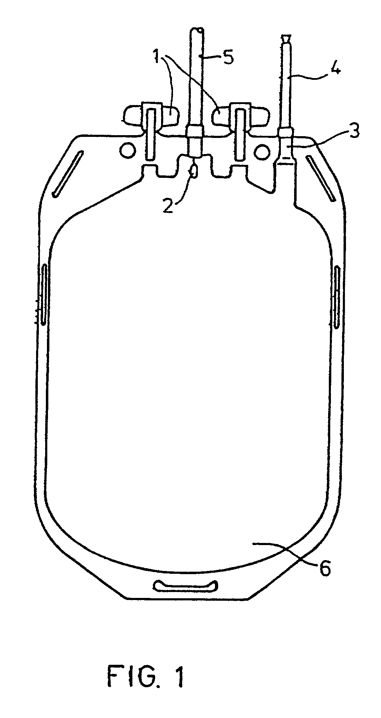

b) Aus der nach a) erhaltenen Folie wird durch Hochfrequenzverschweißung ein Blutbeutel hergestellt, wie er in Figur 1 dargestellt ist. Dieser Beutel hat einen Einsteckstutzen (1), ein Abbrechteil (2) sowie Schlauchansatz (3), Blutentnahmeschlauch (5) mit Zuleitungsschlauch (4) und den eigentlichen Blutbeutel (7). Diese Blutbeutel zeigen bei Sterilisation von 123°C kein Verkleben und keine Ablagerungen von Blutbestandteilen nach einer Lagerung von 14 Tagen.

## Patentansprüche

1. Verfahren zur Herstellung von durchscheinenden, matten Polyurethanfolien mit rauher Oberfläche durch Extrusion von thermpolastischen Polyurethanelastomeren zu Flachfolien oder Folienschläuchen, dadurch gekennzeichnet, daß man die extrudierte Folie bis zu einer Trübung von ≧15%, gemessen nach ASTM D 1003, lagert und anschließend beide Folienoberflächen mit Hilfe von Prägewalzen mit einer unterschiedlichen Anzahl von Rastern, die jeweils im Bereich von 20 bis 100 Rastern/cm² liegt, unter einem Druck von 5 bis 20 bar und bei Temperaturen von 130 bis 175°C prägt.

2. Verfahren nach Anspruch 1, dadurch gekennzeichnet, daß man die Folie bis zu einer Trübung von ≧45% lagert.

3. Verfahren nach Anspruch 1 oder 2 dadurch gekennzeichnet, daß man die Oberflächen der Folie nacheinander und bei unterschiedlich hohen Temperaturen prägt.

4. Verwendung der nach Ansprüchen 1-3 hergestellten Polyurethanfolien als Blutbeutel- oder Infusionsbeutelmaterial.

5. Blut- oder Infusionsbeutel aus Polyurethanfolien hergestellt nach Ansprüchen 1-3.

## Claims

1. Process for producing translucent matt polyurethane films with a rough surface by extruding thermoplastic polyurethane elastomers into flat films or tubular films, characterized in that the extruded film is stored until an opacity of >15% is reached, measured in accordance with ASTM D 1003, and subsequently is embossed on both surfaces using embossing rolls which have a different number of pegs lying in the range 20 to 100 pegs/cm² in each case, under a pressure in the range 5 to 20 bar and at temperatures in the range of 130 to 175°C.

2. Process according to Claim 1, characterized in that the film is stored until an opacity of >45% is reached.

3. Process according to Claim 1 or 2, characterized in that the surfaces of the film are embossed sequentially and at different high temperatures.

4. Use of polyurethane films produced according to Claims 1-3 for blood bag material or infusion bag material.

5. Blood bags or infusion bags made from polyurethane films produced according to Claims 1-3.

## Revendications

1. Procédé de production de feuilles de polyuréthanne mattes, translucides, à surface rugueuse, par extrusion d'élastromères thermoplastiques de polyuréthanne en feuilles planes ou en feuilles tubulaires, caractérisé en ce qu'on entrepose la feuille extrudée jusqu'à l'obtention d'un trouble supérieur ou égal à 15%, mesuré d'après la méthode ASTM D 1003, puis on gaufre les deux surfaces des feuilles sous une pression de 5 à 20 bars et à des températures de 130 à 175°C à l'aide de cylindres de gaufrage à nombre différent de trames se situant dans chaque cas dans l'intervalle de 20 à 100 trames au cm².

2. Procédé suivant la revendication 1, caractérisé en ce qu'on entrepose la feuille jusqu'à un trouble égal ou supérieur à 45%.

3. Procédé suivant la revendication 1 ou 2, caractérisé en ce qu'on gaufre les surfaces de la feuille l'une après l'autre et à des températures de hauteurs différentes.

4. Utilisation des feuilles de polyuréthanne produites selon les revendications 1 à 3 comme matériau pour poches à sang ou poches pour infusion.

5. Poche à sang ou pour infusion en feuilles de polyuréthanne produites selon les revendications 1 à 3.

FIG. 1